# FASCICULE DE BREVET EUROPEEN

(11) **EP 2 766 317 B1**
(45) Date de publication et mention de la délivrance du brevet: **13.06.2018**
(21) Numéro de dépôt: 12780231.2
(22) Date de dépôt: 10.10.2012
(51) Int. Cl.: C03C 17/00, C03C 14/00

(54) **PROCEDE DE FABRICATION D'UNE FEUILLE DE VERRE TRANSPARENTE COLOREE.**
VERFAHREN ZUR HERSTELLUNG EINER GEFÄRBTEN DURCHSICHTIGEN GLASSCHEIBE
PROCESS FOR MANUFACTURING A COLOURED TRANSPARENT GLASS SHEET

(30) Priorité: 12.10.2011 FR 1159213
(43) Date de publication de la demande: 20.08.2014
(73) Titulaire: Saint-Gobain Glass France, 92400 Courbevoie (FR)
(72) Inventeur: GOLETTO, Valérie, F-94700 Maisons Alfort (FR); DEKONINCK, Alexandra, F-95600 Eaubonne (FR)
(74) Mandataire: Saint-Gobain Recherche
(86) Numéro de dépôt international: PCT/FR2012/052302
(87) Numéro de publication internationale: WO 2013/054041

(56) Documents cités:
- EP-A1- 0 844 217
- EP-A1- 0 990 624
- EP-A2- 0 699 637
- EP-A2- 0 909 745
- WO-A1-2005/063645
- DE-A1- 19 946 712

## Description

La présente invention se rapporte au domaine des verres colorés pour automobiles et bâtiments, notamment à usage d'habitation ou de bureau.

L'invention concerne plus particulièrement un procédé de fabrication d'une feuille de verre destinée à la réalisation de vitrages à caractère décoratif, notamment pour équiper les façades de bâtiments, qui comprend au moins une couche vitreuse transparente colorée sur au moins une partie d'au moins une de ses faces.

L'invention a aussi pour objet la feuille de verre obtenue par le procédé précité et les vitrages incluant ladite feuille.

La coloration d'une feuille de verre peut être effectuée « dans la masse », c'est-à-dire en incluant des agents colorants dans la composition vitrifiable, avant son élaboration et sa mise en forme, ou en déposant des couches colorées sur tout ou partie d'au moins une face de la feuille.

Notamment, il est connu d'appliquer des couches d'émail colorées par sérigraphie à la surface d'une feuille de verre pour former des motifs décoratifs. Les motifs ainsi obtenus sont opaques.

Les couches colorées visées dans la présente invention sont des couches colorées vitreuses transparentes.

On connaît des procédés permettant d'appliquer des couches colorées transparentes sur différents supports, notamment du verre.

Dans US 5 731 091, des couches vitreuses colorées transparentes sont obtenues à partir d'une composition comprenant un silane hydrolysable, un organosilane et un ligant fonctionnel, qui est déposée à la surface du support et traitée thermiquement afin de densifier la couche.

WO 2005/063645 décrit un substrat, notamment en verre, comprenant un revêtement transparent et/ou réfléchissant facile à nettoyer à base d'oxyde métallique qui peut être appliqué par sérigraphie.

EP 0 699 637 décrit un colorant pour revêtement transparent qui est constitué de particules métalliques ultrafines dispersées dans un polymère. Le colorant est utilisé dans une composition comprenant en outre un agent fixant, une poudre de verre et une résine, appliquée notamment par sérigraphie.

Dans EP 0 844 217, il est décrit un procédé pour former un film transparent coloré sur un substrat par sérigraphie.

Le film est obtenu à partir d'une composition contenant des particules ultrafines d'un métal précieux, un agent de fixation, une résine, des précurseurs de verre et un solvant.

EP 0 909 745 décrit une composition colorante applicable par sérigraphie sur une surface en verre qui comprend de fines particules d'or et d'argent, un agent fixant, une résine et un solvant organique.

La présente invention a pour but de fournir un procédé de fabrication d'une feuille de verre pourvue sur tout ou partie d'au moins une de ses faces d'au moins une couche vitreuse colorée et transparente, qui opère par sérigraphie.

Un autre but de l'invention est d'obtenir des couches vitreuses colorées transparentes de bonne qualité, en particulier qui sont exemptes de craquelures et présentent une bonne résistance au vieillissement, et qui en outre sont aptes à résister au traitement de trempe thermique.

Ces buts sont atteints selon l'invention par le procédé de fabrication d'une feuille de verre comportant au moins une couche vitreuse colorée et transparente, qui comprend les étapes consistant à
- déposer par sérigraphie, sur tout ou partie de la surface d'au moins une face de la feuille de verre, au moins une couche d'une composition comprenant
   (A) un sol obtenu par hydrolyse et polycondensation d'au moins un composé de formule de formule

      MX₄ (I)

      dans laquelle M représente un atome de Si, Ti, Zr ou Al, et les radicaux X, identiques ou différents, représentent un groupe hydroxyle ou un groupe hydrolysable ou un oligomère dérivé de ce composé,
   (B) au moins un colloïde comprenant un sel métallique et un agent complexant choisi parmi les diamines,
   (C) au moins un solvant présentant une température d'ébullition au moins égale à 150°C,
   (D) au moins un agent épaississant choisi parmi les dérivés non ioniques de la cellulose, et
- chauffer la feuille revêtue de la couche ou des couches à une température suffisante pour obtenir le développement de la couleur.

Dans la première étape, l'épaisseur de la couche déposée (humide) peut atteindre 20 µm en un seul passage au travers de l'écran de sérigraphie. Bien que l'épaisseur de la couche soit importante, on n'observe pas de craquelures dans la couche finale après le traitement thermique de l'étape ultérieure. L'épaisseur de la couche peut être modulée en fonction notamment de la capacité colorante du colloïde (B). En règle générale, l'épaisseur minimale de la couche est d'environ 6 µm.

Le groupe hydrolysable X du composé de formule (I) est de préférence un radical alkoxy en C₁-C₆, avantageusement méthyloxy, éthyloxy, propyloxy ou butyloxy, et mieux encore méthyloxy ou éthyloxyy.

De préférence encore, M représente un atome de Si ou de Ti.

Le composé de formule (I) est avantageusement le tétraéthyoxysilane (TEOS) ou le tétrabutoxytitanate, et mieux encore le TEOS.

La quantité de sol dans la composition dépend de la nature du composé de formule (I). Par exemple, la teneur pondérale du sol (A) calculée sur la base de l'ensemble des composés (A), (B) et (D), peut varier de 4 à 20 %, de préférence de 5 à 15 % et avantageusement de 8 à 10 % quand M est égal à Si, et la teneur pondérale varie de préférence de 50 à 65 % quand M est égal à Ti.

Le composé entrant dans la constitution du colloïde (B) peut être un métal, un oxyde métallique ou sel métallique.

Par « colloïde », on entend ici une suspension de particules présentant une taille comprise entre 1 et 100 nanomètres (aussi dénommées « nanoparticules ») dans un liquide.

De préférence le métal est l'or, l'argent, le platine ou le palladium. A titre d'exemples de sels métalliques, on peut citer les halogénures, en particulier les chlorures et les bromures, les nitrures et les acétates des métaux précités.

L'obtention des nanoparticules à partir d'un sel métallique est effectuée en présence d'un agent complexant, en particulier une diamine. Avantageusement, la diamine est un diaminosilane, en particulier le 3-(aminoéthyl)aminopropyltriéthoxysilane (DIAMO).

Les nanoparticules métalliques selon leur taille et leur forme confèrent des couleurs qui peuvent varier sensiblement.

On préfère utiliser des sels métalliques car ils présentent l'avantage de permettre l'obtention *in situ* des nanoparticules du colloïde : on évite ainsi d'avoir à manipuler des nanoparticules, ce qui ne peut se faire que dans des conditions réglementées imposant notamment un confinement et des moyens de protection pour les opérateurs.

La quantité de colloïde (B) dans la composition varie également selon la nature du composé de formule (I). En règle générale, la teneur pondérale de (B) calculée sur la base de l'ensemble des composés (A), (B) et (D), varie de 1 à 50 %, de préférence de 5 à 30 % et avantageusement de 7 à 25 % quand M = Si, et de préférence de 10 à 50, avantageusement de 14 à 20 % quand M est égal à Ti.

Le solvant (C) a comme indiqué précédemment un point d'ébullition au moins égal à 150°C, de préférence au plus égal à 300°C et avantageusement au plus égal à 250°C.

A titre d'exemples de tels solvants, on peut citer les éthers de glycols, notamment les alkyl éthers de polypropylène glycols. Les éthers méthyliques de dipropylène glycol sont particulièrement préférés.

La quantité de solvant (C) représente au moins 76 % du poids total de la composition, de préférence au moins 80 % et avantageusement au moins 90 %.

L'agent épaississant (D) permet d'adapter la viscosité de la composition afin que celle-ci puisse être appliquée par sérigraphie. En général, la viscosité mesurée au moyen d'un rhéomètre à géométrie cône-plan varie de 5 à 50 Pa.s à une vitesse de cisaillement égale à 0,01 s⁻¹, ou est inférieure à 1 Pa.s à un cisaillement de 1000 s⁻¹.

L'agent épaississant est de préférence choisi parmi les dérivés de la cellulose, en particulier les alkylcelluloses et les hydroxyalkylcelluloses, avantageusement les hydroxypropylcelluloses.

La quantité d'agent épaississant à inclure dans la composition varie en fonction du poids moléculaire dudit agent. En général, l'agent épaississant représente 1 à 60 % du poids total des composés (A), (B) et (D), de préférence 7 à 50 %.

Selon un mode de réalisation, le sol (A) comprend en outre un organosilane de formule

R¹ₐ R²_{b} Si X_{(4-a-b)} (II)

dans laquelle
R¹ représente un radical non hydrolysable,
R², différent de R₁, représente un radical portant un groupe epoxy ou amino,
X a la signification donnée précédemment dans la formule (I),
a et b, identiques ou différents, sont égaux à 0, 1, 2 ou 3,
(a+b) est égal à 1, 2 ou 3,
ou un oligomère dérivé de ce silane.

Dans la formule (II), le radical R¹ est de préférence un radical alkyle, avantageusement en C₁-C₆, un radical alcényle, avantageusement en C₂-C₆, par exemple vinyle, propényle ou butényle, un radical alcynyle, avantageusement en C₂-C₆, par exemple acétynyle ou propargyle, ou un radical aryle, avantageusement en C₆-C₁₀, par exemple phényle ou naphtyle.

Le groupe fonctionnel porté par le radical R² est lié à l'atome de silicium par un radical alkylène, alcénylène ou alcynylène, éventuellement contenant des groupes divalents tels que O, S et/ou NH. Avantageusement, le radical R² contient 1 à 8 atomes de carbone.

De préférence, a est égal à 0, 1 ou 2, b est égal à 1 ou 2 et la somme (a+b) est égale à 1 ou 2.

L'organosilane de formule (II) préféré est le glycidoxypropyltriméthyoxysilane (GLYMO).

De préférence, le rapport pondéral composé de formule (I):composé de formule (II) varie de 5:95 à 50:50, avantageusement de 15:85 à 25:75.

Selon un mode de réalisation particulièrement préféré, la composition appliquée par sérigraphie comprend (A) au moins un sol obtenu par hydrolyse et polycondensation d'au moins un composé de formule (I) dans laquelle M représente un atome de Si, (B) au moins un colloïde de sel métallique, (C) au moins un solvant présentant une température d'ébullition au moins égale à 150°C, (D) au moins une hydroxypropylcellulose et en outre au moins une diamine et au moins un composé de formule (II) portant au moins une fonction epoxy. Une telle composition permet d'obtenir une couche colorée transparente finale formée d'un réseau hybride qui présente une bonne résistance au vieilliissement.

Selon un autre mode de réalisation, la composition appliquée par sérigraphie comprend (A) au moins un sol obtenu par hydrolyse et polycondensation d'au moins un composé de formule (I) dans laquelle M représente un atome de Ti, Zr ou Al, les autres constituants (B) à (D) et en outre au moins un agent complexant du composé de formule (I), de préférence une dicétone. L'agent complexant permet un meilleur contrôle de la cinétique de réaction des composés et un ajustement du temps d'utilisation (« pot life ») de la composition.

La composition déposée à la première étape du procédé présente une teneur en matières solides (ou extrait sec) inférieure à 20 %, cette teneur étant définie comme étant le rapport de la somme des masses des composés (A), (B) et D à la masse totale de la composition. De préférence, la teneur en matières solides est au plus égale à 13 %, avantageusement au plus égale à 8 %.

Dans la deuxième étape du procédé, la feuille de verre est soumise à une température qui permet d'augmenter la densité de la couche déposée et de la rendre ainsi plus solide.

Comme indiqué précédemment, la température doit être suffisamment élevée pour permettre le développement de la couleur. La température est généralement au moins égale à 100°C et au plus égale à la température à laquelle on observe une déformation de la feuille de verre. De préférence la température est au plus égale à 700°C et avantageusement au plus égale à 650°C.

Le procédé selon l'invention autorise le dépôt de plusieurs couches de la composition précitée à la première étape, par exemple jusqu'à 10 couches qui peuvent être appliquées consécutivement ou de préférence après une opération de séchage entre chaque couche visant à éliminer une partie des composés volatils.

Le séchage peut être effectué à une température qui varie de 60 à 200°C, de préférence 80 à 110°C.

Les exemples qui suivent permettent d'illustrer l'invention sans toutefois la limiter.

### EXEMPLE 1

### a) préparation du sol-gel

On mélange 0,3 g de tétraéthoxysilane (TEOS), 1,36 g de 3-glycidoxypropyltriméthoxysilane (GLYMO), 1,5 g d'éthanol absolu et 0,23 g d'acide chlorhydrique 0,1 M. Le mélange est placé sous agitation, à 25°C pendant 48 heures.

### b) préparation du colloïde de métal

Dans un récipient contenant 7,71 g d'éther de glycol (Dowanol® DPM commercialisé par DOW CHEMICAL COMPANY), on ajoute 0,4 g de 3-(aminoéthyl)aminopropyltriéthoxysilane (DIAMO) et 0,708 g d'une solution aqueuse d'acide chloroaurique H[AuCl₄]-3 H₂O à 50 % en poids. On ajoute ensuite 38,6 g d'une solution d'hydroxypropylcellulose (Klucel® M commercialisé par AQUALON) à 1,5 % en poids dans l'éther de glycol (Dowanol® DPM).

Le rapport molaire acide chloroaurique/DIAMO est égal à 1.

Les préparations a) et b) sont mélangées et la composition obtenue est déposée sur une feuille de verre par sérigraphie sous la forme d'une couche ayant une épaisseur de 12 µm. La composition présente un extrait sec égal à 5,04 %.

La feuille de verre est introduite dans un four chauffé à 640°C pendant 3 minutes. La feuille obtenue est revêtue d'une couche transparente de couleur rose.

### EXEMPLE 2

On procède dans les conditions de l'exemple 1 modifiées en ce qu'à l'étape b) on utilise 0,825 g de DIAMO et on remplace l'acide chloroaurique par AgNO₃ (0,63 g).

La composition présente un extrait sec égal à 6,1 %.

Le rapport molaire AgNO₃/DIAMO est égal à 1.

La feuille présente une coloration jaune.

### EXEMPLE 3

On procède dans les conditions de l'exemple 1 modifiées en ce qu'à l'étape b) on utilise 0,47 g de DIAMO et on remplace l'acide chloroaurique par de l'acétate de palladium (0,48 g).

La composition présente un extrait sec égal à 5,8 %.

Le rapport molaire acétate de palladium/DIAMO est égal à 1.

La feuille présente une coloration brun clair.

### EXEMPLES 4 A 6

On procède dans les conditions de l'exemple 1 modifiées en ce que le rapport molaire H[AuCl₄]/DlAMO est égal à 1,2 (exemple 4), 0,71 (exemple 5) et 0,12 (exemple 6).

Les feuilles de verre obtenues présentent respectivement une coloration violette, rose intense et rose clair.

### EXEMPLE 7

On procède dans les conditions de l'exemple 1 modifiées en ce qu'à l'étape b) on remplace l'acide chloroaurique par du bromure d'or AuBr₃ (0,78 g).

La composition présente un extrait sec égal à 5,6 %.

Le rapport molaire AuBr₃/DIAMO est égal à 1.

La feuille présente une coloration violette.

Dans une variante, la solution de bromure d'or a été préalablement mélangée avec le 3-(aminoéthyl)aminopropyltriéthoxysilane (DIAMO), chauffée à 50°C pendant 2 heures, puis refroidie. Dans ce cas, la feuille obtenue présente une coloration bleu indigo.

### EXEMPLE 8

### a) préparation du sol-gel

On mélange 0,54 g de tétraéthoxysilane (TEOS), 2,46 g de 3-glycidoxypropyltriméthoxysilane (GLYMO), 2,73 g d'éthanol absolu et 0,41 g d'acide nitrique 0,1 M. Le mélange est placé sous agitation, à 25°C pendant 48 heures.

### b) préparation du colloïde d'oxyde de métal

Dans un récipient contenant 83,89 g d'une solution d'hydroxypropylcellulose (Klucel® L commercialisé par AQUALON) à 2 % en poids dans l'éther de glycol (Dowanol® DPM), on ajoute 4,53 g de 3-(aminoéthyl)aminopropyltriéthoxysilane (DIAMO) et 5,44 g d'une dispersion aqueuse de nanoparticules d'hydroxyde de fer α-FeOOH (goethite). La composition obtenue est homogénéisée dans un dispositif à ultrasons.

Les préparations a) et b) sont mélangées et la composition obtenue est déposée sur une feuille de verre par sérigraphie sous la forme d'une couche d'épaisseur égale à 12 µm.

La couleur de la feuille est jaune après l'application devient orange après traitement à 640°C pendant 3 minutes.

### EXEMPLE 9

Dans un récipient contenant 4,78 g d'éther de glycol (Dowanol® DPM commercialisé par DOW CHEMICAL COMPANY), on ajoute 0,71 g d'une solution aqueuse d'acide chloroaurique H[AuCl₄] .3 H₂O à 50 % en poids.

On ajoute ensuite 2,5 g de tétrabutoxyde de titane, 0,35 g d'acétylacétone et 41,67 g d'une solution d'hydroxypropylcellulose (Klucel® M commercialisé par AQUALON) à 1,5 % en poids dans l'éther de glycol (Dowanol® DPM).

La composition obtenue est placée sous agitation pendant 1 heure à 25°C, puis déposée sur une feuille de verre par sérigraphie sous la forme d'une couche de 12 µm d'épaisseur.

La feuille de verre est introduite dans un four chauffé à 640°C pendant 3 minutes. La feuille obtenue est revêtue d'une couche transparente de couleur bleu intense.

### EXEMPLE 10

Dans un récipient contenant 4,38 g d'éther de glycol (Dowanol® DPM commercialisé par DOW CHEMICAL COMPANY), on ajoute 0,40 g de 3-(aminoéthyl)aminopropyltriéthoxysilane (DIAMO) et 0,78 g d'une solution aqueuse d'acide chloroaurique H[AuCl₄].3 H₂O à 50 % en poids. La composition est maintenue sous agitation pendant 1 heure à 25°C.

On ajoute ensuite 2,5 g de tétrabutoxyde de titane, 0,35 g d'acétylacétone et 41,67 g d'une solution d'hydroxypropylcellulose (Klucel® M commercialisé par AQUALON) à 1,5 % en poids dans l'éther de glycol (Dowanol® DPM).

La composition obtenue est placée sous agitation pendant 1 heure à 25°C, puis déposée sur une feuille de verre par sérigraphie sous la forme d'une couche de 12 µm d'épaisseur.

La feuille de verre est introduite dans un four chauffé à 640°C pendant 3 minutes. La feuille obtenue est revêtue d'une couche transparente de couleur bleu indigo.

### EXEMPLES 13 A 15

Les feuilles de verre des exemples 1, 2 et 8 sont utilisées pour réaliser des verres feuilletés d'une part et des double-vitrages d'autre part.

Les verres feuilletés comprennent la feuille de verre selon l'invention et une feuille de verre classique, non colorée, réunies par un film de polyvinyl butyral (PVB).

Les double-vitrages sont constitués de la feuille de verre selon l'invention et d'une autre feuille de verre classique, non colorée, toutes deux ayant une épaisseur de 4 mm, espacées l'une de l'autre de 12 mm.

Dans les deux variantes, la face colorée de la feuille de verre selon l'invention est placée en face 2.

Les verres feuilletés et les double-vitrage sont soumis aux tests suivants dans les conditions ci-après :
- les verres feuilletés subissent un vieillissement accéléré à température et humidité élevées (norme EN 12543-4).

Sur les verres avant et après le test de vieillissement, on mesure les caractéristiques optiques telles que les coordonnées colorimétriques L*, a* et b*, la transmission lumineuse dans le visible et dans l'UV (norme EN 410), le flou (norme ASTM 1003) et on recherche la présence de bulles (taille maximale autorisée : 10 mm) ou de délamination au niveau des bords du vitrage (norme EN 12543-4).
- les double-vitrages subissent un traitement de vieillissement accéléré dans les conditions d'humidité et de condensation élevées (norme EN 1279-6).

On constate que les feuilles de verre selon l'invention incluses dans les vitrages feuilletés et les double-vitrages ne sont pas affectées par le traitement de vieillissement. La couche conserve sa transparente et sa couleur initiale après vieillissement. Ladite couche n'affecte pas les propriétés des vitrages feuilletés et des double-vitrages.

## Revendications

1. Procédé de fabrication d'une feuille de verre comportant au moins une couche vitreuse colorée et transparente, qui comprend les étapes consistant à
- déposer par sérigraphie, sur tout ou partie de la surface d'au moins une face de la feuille de verre, au moins une couche d'une composition comprenant
(A) un sol obtenu par hydrolyse et polycondensation d'au moins un composé de formule de formule
MX₄ (I)
dans laquelle M représente un atome de Si, Ti, Zr ou Al, et les radicaux X, identiques ou différents, représentent un groupe hydroxyle ou un groupe hydrolysable
ou un oligomère dérivé de ce composé,
(B) au moins un colloïde comprenant un sel métallique et un agent complexant choisi parmi les diamines,
(C) au moins un solvant présentant une température d'ébullition au moins égale à 150°C,
(D) au moins un agent épaississant choisi parmi les dérivés non ioniques de la cellulose, et
- chauffer la feuille revêtue de la couche ou des couches à une température suffisante pour obtenir le développement de la couleur.

2. Procédé de fabrication selon la revendication 1, **caractérisé en ce que** le groupe hydrolysable X du composé de formule (I) est un radical alkoxy en C₁-C₆, de préférence méthyloxy, éthyloxy, propyloxy ou butyloxy, et avantageusement méthyloxy ou éthyloxy.

3. Procédé de fabrication selon la revendication 1 ou 2, **caractérisé en ce que** M représente un atome de Si ou de Ti.

4. Procédé de fabrication selon la revendication 3, **caractérisé en ce que** le composé de formule (I) est le tétraéthyoxysilane (TEOS) ou le tétrabutoxytitanate.

5. Procédé de fabrication selon l'une des revendications 1 à 4, **caractérisé en ce que** le colloïde (B) est un métal choisi parmi l'or, l'argent, le platine ou le palladium, et les sels métalliques choisis parmi les halogénures, les nitrures et les acétates des métaux précités.

6. Procédé de fabrication selon l'une des revendications 1 à 5, **caractérisé en ce que** l'agent complexant est un diaminosilane, en particulier le 3-(aminoéthyl)aminopropyltriéthoxysilane..

7. Procédé de fabrication selon l'une des revendications 1 à 6, **caractérisé en ce que** le solvant (C) présente un point d'ébullition au plus égal à 300°C, de préférence au plus égal à 250°C.

8. Procédé de fabrication selon l'une des revendications 1 à 7, **caractérisé en ce que** la quantité de solvant (C) représente au moins 76 % du poids total de la composition, de préférence au moins 80 % et avantageusement au moins 90 %.

9. Procédé de fabrication selon l'une des revendications 1 à 8, **caractérisé en ce que** le solvant est un éther de glycol, de préférence un alkyl éther de propylène glycol.

10. Procédé de fabrication selon la revendication 9, **caractérisé en ce que** le solvant est un éther méthylique de dipropylène glycol.

11. Procédé de fabrication selon l'une des revendications 1 à 10, **caractérisé en ce que** l'agent épaississant (D) est choisi parmi les dérivés de la cellulose, de préférence les alkylcelluloses et les hydroxyalkylcelluloses.

12. Procédé de fabrication selon l'une des revendications 1 à 11, **caractérisé en ce que** le sol (A) comprend en outre un organosilane de formule
R¹ₐ R²_{b} Si X_{(4-a-b)} (II)
dans laquelle
R¹ représente un radical non hydrolysable,
R², différent de R₁, représente un radical portant un groupe epoxy ou amino,
X a la signification donnée précédemment dans la formule (I),
a et b, identiques ou différents, sont égaux à 0, 1, 2 ou 3,
(a+b) est égal à 1, 2 ou 3,
ou un oligomère dérivé de ce silane.

13. Procédé de fabrication selon la revendication 12, **caractérisé en ce que** le radical R¹ est un radical alkyle, de préférence en C₁-C₆, un radical alcényle, de préférence en C₂-C₆, un radical alcynyle, de préférence en C₂-C₆, ou un radical aryle, de préférence en C₆-C₁₀.

14. Procédé de fabrication selon la revendication 12 ou 13, **caractérisé en ce que** le groupe fonctionnel porté par le radical R² est lié à l'atome de silicium par un radical alkylène, alcénylène ou alcynylène, éventuellement contenant des groupes divalents tels que O, S et/ou NH.

15. Procédé de fabrication selon l'une des revendications 12 à 14, **caractérisé en ce que** le rapport pondéral composé de formule (I):composé de formule (II) varie de 5:95 à 50:50, avantageusement de 15:85 à 25:75.

16. Procédé de fabrication selon l'une des revendications 1 à 15, **caractérisé en ce que** la teneur pondérale du sol (A) calculée sur la base de l'ensemble des composés (A), (B) et (D), varie de 4 à 20 %, de préférence de 5 à 15 % et avantageusement de 8 à 10 % quand M est égal à Si, et la teneur pondérale varie de préférence de 50 à 65 % quand M est égal à Ti.

17. Procédé de fabrication selon l'une des revendications 1 à 16, **caractérisé en ce que** la teneur pondérale de (B) calculée sur la base de l'ensemble des composés (A), (B) et (D), varie de 1 à 50 %, de préférence de 5 à 30 % et avantageusement de 7 à 25 % quand M = Si, et de préférence de 10 à 50, avantageusement de 14 à 20 % quand M est égal à Ti.

18. Procédé de fabrication selon l'une des revendications 1 à 17, **caractérisé en ce que** la quantité d'agent épaississant (D) représente 1 à 60 % du poids total des composés (A), (B) et (D), de préférence 7 à 50 %.

19. Procédé de fabrication selon l'une des revendications 1 à 18, **caractérisé en ce que** la composition présente une teneur en matières solides, définie comme étant le rapport de la somme des masses des composés (A), (B) et D à la masse totale de la composition, qui inférieure à 20 %, de préférence est au plus égale à 13 %.

20. Procédé de fabrication selon l'une des revendications 1 à 19, **caractérisé en ce que** la feuille est chauffée à une température au moins égale à 100°C et au plus égale à la température à laquelle on observe une déformation de la feuille de verre.

21. Procédé de fabrication selon l'une des revendications 1 à 20, **caractérisé en ce qu'**il comprend, après l'application de la couche ou de chaque couche, une étape de séchage, de préférence à une température qui varie de 60 à 200°C, de préférence 80 à 110°C.

22. Feuille de verre obtenue par le procédé selon l'une des revendications 1 à 21.

23. Vitrage comprenant au moins une feuille de verre selon la revendication 22.

24. Vitrage selon la revendication 23, **caractérisé en ce qu'**il s'agit d'un vitrage feuilleté ou d'un double-vitrage.

## Patentansprüche

1. Verfahren zur Herstellung einer Glasscheibe, umfassend mindestens eine gefärbte und durchsichtige Glasschicht, das die Schritte aufweist, die darin bestehen:
- durch Siebdruck auf der gesamten oder einem Teil der Fläche von mindestens einer Seite der Glasscheibe mindestens eine Schicht einer Zusammensetzung aufzubringen, umfassend
(A) ein Sol, das durch Hydrolysieren und Polykondensieren von mindestens einer Verbindung der Formel
MX₄ (I)
erhalten wird, wobei M ein Si-, Ti-, Zr-oder Al-Atom darstellt und die Reste X, die gleich oder verschieden sind, eine Hydroxylgruppe oder eine hydrolysierbare Gruppe darstellen,
oder ein von dieser Verbindung abgeleitetes Oligomer,
(B) mindestens ein Kolloid, umfassend ein Metallsalz und einen Komplexbildner, ausgewählt aus den Diaminen,
(C) mindestens ein Lösungsmittel, das eine Siedetemperatur von mindestens gleich 150 °C aufweist,
(D) mindestens ein Verdickungsmittel, ausgewählt aus den nichtionischen Cellulosederivaten, und
- die Scheibe, die mit der Schicht oder den Schichten beschichtet wird, auf eine Temperatur zu erhitzen, die ausreicht, um die Farbentwicklung zu erhalten.

2. Verfahren zur Herstellung nach Anspruch 1, **dadurch gekennzeichnet, dass** die hydrolysierbare Gruppe X der Verbindung der Formel (I) ein C₁-C₆-Alkoxyrest, vorzugsweise ein Methyloxyrest, ein Ethyloxyrest, ein Propyloxyrest oder ein Butyloxyrest und vorzugsweise ein Methyloxyrest oder ein Ethyloxyrest ist.

3. Verfahren zur Herstellung nach Anspruch 1 oder 2, **dadurch gekennzeichnet, dass** M ein Si-Atom oder Ti-Atom darstellt.

4. Verfahren zur Herstellung nach Anspruch 3, **dadurch gekennzeichnet, dass** die Verbindung der Formel (I) Tetraethoxysilan (TEOS) oder Tetrabutoxytitanat ist.

5. Verfahren zur Herstellung nach einem der Ansprüche 1 bis 4, **dadurch gekennzeichnet, dass** das Kolloid (B) ein Metall ist, das aus Gold, Silber, Platin oder Palladium ausgewählt wird, und die Metallsalze aus Halogeniden, Nitriden und Acetaten der vorgenannten Metalle ausgewählt werden.

6. Verfahren zur Herstellung nach einem der Ansprüche 1 bis 5, **dadurch gekennzeichnet, dass** der Komplexbildner ein Diaminosilan, insbesondere 3-(Aminoethyl)aminopropyltriethoxysilan ist.

7. Verfahren zur Herstellung nach einem der Ansprüche 1 bis 6, **dadurch gekennzeichnet, dass** das Lösungsmittel (C) einen Siedepunkt aufweist, der höchstens gleich 300 °C, vorzugsweise höchstens gleich 250 °C ist.

8. Verfahren zur Herstellung nach einem der Ansprüche 1 bis 7, **dadurch gekennzeichnet, dass** die Menge an Lösungsmittel (C) mindestens 76 % des Gesamtgewichts der Zusammensetzung, vorzugsweise mindestens 80 % und vorteilhafterweise mindestens 90 % beträgt.

9. Verfahren zur Herstellung nach einem der Ansprüche 1 bis 8, **dadurch gekennzeichnet, dass** das Lösungsmittel ein Glykolether, vorzugsweise ein Propylenglykolalkylether ist.

10. Verfahren zur Herstellung nach Anspruch 9, **dadurch gekennzeichnet, dass** das Lösungsmittel ein Dipropylenglykolmethylether ist.

11. Verfahren zur Herstellung nach einem der Ansprüche 1 bis 10, **dadurch gekennzeichnet, dass** das Verdickungsmittel (D) aus den Cellulosederivaten, vorzugsweise den Alkylcellulosen und den Hydroxyalkylcellulosen ausgewählt wird.

12. Verfahren zur Herstellung nach einem der Ansprüche 1 bis 11, **dadurch gekennzeichnet, dass** das Sol (A) ferner ein Organosilan der Formel
**R¹ₐ R²_{b} Si X_{(4-a-b)}** **(II)**
worin
R¹ einen nicht hydrolysierbaren Rest darstellt,
R², das von R₁ verschieden ist, einen Rest darstellt, der eine Epoxy- oder Aminogruppe trägt,
X die vorher in der Formel (I) genannte Bedeutung hat,
a und b, die gleich oder verschieden sind, gleich 0, 1, 2 oder 3 sind,
(a + b) gleich 1, 2 oder 3 ist,
oder ein Oligomer, das von diesem Silan abgeleitet wird, umfasst.

13. Verfahren zur Herstellung nach Anspruch 12, **dadurch gekennzeichnet, dass** der Rest R¹ ein Alkylrest, vorzugsweise ein C₁-C₆-Alkylrest, ein Alkenylrest, vorzugsweise ein C₂-C₆-Alkenylrest, ein Alkinylrest, vorzugsweise ein C₂-C₆-Alkinylrest, oder ein Arylrest, vorzugsweise ein C₆-C₁₀-Arylrest, ist.

14. Verfahren zur Herstellung nach Anspruch 12 oder 13, **dadurch gekennzeichnet, dass** die funktionelle Gruppe, die vom Rest R² getragen wird, über einen Alkylen-, Alkenylen- oder Alkinylenrest, der eventuell divalente Gruppen wie O, S und/oder NH enthält, an das Siliciumatom gebunden ist.

15. Verfahren zur Herstellung nach einem der Ansprüche 12 bis 14, **dadurch gekennzeichnet, dass** das Gewichtsverhältnis Verbindung der Formel (I): Verbindung der Formel (II) von 5:95 bis 50:50, vorteilhafterweise von 15:85 bis 25:75 variiert.

16. Verfahren zur Herstellung nach einem der Ansprüche 1 bis 15, **dadurch gekennzeichnet, dass** der Gewichtsgehalt des Sols (A), der auf der Grundlage aller Verbindungen (A), (B) und (D) berechnet wird, von 4 bis 20 %, vorzugsweise von 5 bis 15 % und vorteilhafterweise von 8 bis 10 % variiert, wenn M gleich Si ist, und der Gewichtsgehalt von 50 bis 65 % variiert, wenn M gleich Ti ist.

17. Verfahren zur Herstellung nach einem der Ansprüche 1 bis 16, **dadurch gekennzeichnet, dass** der Gewichtsgehalt von (B), der auf der Grundlage aller Verbindungen (A), (B) und (D) berechnet wird, von 1 bis 50 %, vorzugsweise von 5 bis 30 % und vorteilhafterweise von 7 bis 25 % variiert, wenn M = Si ist, und vorzugsweise von 10 bis 50, vorteilhafterweise von 14 bis 20 % variiert, wenn M gleich Ti ist.

18. Verfahren zur Herstellung nach einem der Ansprüche 1 bis 17, **dadurch gekennzeichnet, dass** die Menge an Verdickungsmittel (D) 1 bis 60 % des Gesamtgewichts der Verbindungen (A), (B) und (D) und vorzugsweise 7 bis 50 % darstellt.

19. Verfahren zur Herstellung nach einem der Ansprüche 1 bis 18, **dadurch gekennzeichnet, dass** die Zusammensetzung einen Feststoffgehalt aufweist, der als das Verhältnis der Summe der Massen der Verbindungen (A), (B) und D zu der Gesamtmasse der Zusammensetzung definiert wird, der niedriger als 20 %, vorzugsweise höchstens gleich 13 % ist.

20. Verfahren zur Herstellung nach einem der Ansprüche 1 bis 19, **dadurch gekennzeichnet, dass** die Scheibe auf eine Temperatur erhitzt wird, die mindestens gleich 100 °C und höchstens gleich der Temperatur ist, bei der eine Verformung der Glasscheibe beobachtet wird.

21. Verfahren zur Herstellung nach einem der Ansprüche 1 bis 20, **dadurch gekennzeichnet, dass** es nach dem Aufbringen von der oder jeder Schicht einen Schritt des Trocknens, vorzugsweise bei einer Temperatur, die von 60 bis 200 °C, vorzugsweise von 80 bis 110 °C variiert, aufweist.

22. Glasscheibe, die nach dem Verfahren nach einem der Ansprüche 1 bis 21 erhalten wird.

23. Verglasung, umfassend mindestens eine Glasscheibe nach Anspruch 22.

24. Verglasung nach Anspruch 23, **dadurch gekennzeichnet, dass** es sich um eine Verbundverglasung oder eine Doppelverglasung handelt.

## Claims

1. Process for manufacturing a glass sheet comprising at least one colored and transparent glassy layer, which comprises the steps consisting in:
- depositing by screen printing, on all or part of the surface of at least one face of the glass sheet, at least one layer of a composition comprising:
(A) a sol obtained by hydrolysis and polycondensation of at least one compound of formula:
MX₄ (I)
wherein M represents an Si, Ti, Zr or Al atom, and the radicals X, which are identical or different, represent a hydroxyl group or a hydrolyzable group
or an oligomer derived from this compound,
(B) at least one colloid comprising a metal salt and a complexing agent selected from diamines,
(C) at least one solvent having a boiling point at least equal to 150°C,
(D) at least one thickener selected from nonionic cellulose derivatives, and
- heating the sheet coated with the layer or layers at a temperature sufficient to obtain the development of the color.

2. Manufacturing process according to Claim 1, **characterized in that** the hydrolyzable group X of the compound of formula (I) is a C₁-C₆ alkoxy radical, preferably a methyloxy, ethyloxy, propyloxy or butyloxy radical, and advantageously a methyloxy or ethyloxy radical.

3. Manufacturing process according to Claim 1 or 2, **characterized in that** M represents an Si or Ti atom.

4. Manufacturing process according to Claim 3, **characterized in that** the compound of formula (I) is tetraethoxysilane (TEOS) or tetrabutoxy titanate.

5. Manufacturing process according to one of Claims 1 to 4, **characterized in that** the colloid (B) is a metal selected from gold, silver, platinum or palladium, and metals salts selected from halides, nitrides and acetates of the aforementioned metals.

6. Manufacturing process according to one of Claims 1 to 5, **characterized in that** the complexing agent is a diaminosilane, in particular 3-(aminoeltryl) aminopropyltoielthoxysilane.

7. Manufacturing process according to one of Claims 1 to 6, **characterized in that** the solvent (C) has a boiling point at most equal to 300°C, preferably at most equal to 250°C.

8. Manufacturing process according to one of Claims 1 to 7, **characterized in that** the amount of solvent (C) represents at least 76%, preferably at least 80% and advantageously at least 90%, of the total weight of the composition.

9. Manufacturing process according to one of Claims 1 to 8, **characterized in that** the solvent is a glycol ether, preferably a propylene glycol alkyl ether.

10. Manufacturing process according to Claim 9, **characterized in that** the solvent is a dipropylene glycol methyl ether.

11. Manufacturing process according to one of Claims 1 to 10, **characterized in that** the thickener (D) is selected from cellulose derivatives, preferably alkyl celluloses and hydroxyalkyl celluloses.

12. Manufacturing process according to one of Claims 1 to 11, **characterized in that** the sol (A) additionally comprises an organosilane of formula:
R¹ₐ R²_{b} Si X_{(4-a-b)} (II)
wherein:
R¹ represents a non-hydrolyzable radical,
R², different from R₁, represents a radical bearing an epoxy or amino group,
X has the meaning given previously in formula (I),
a and b, which are identical or different, are equal to 0, 1, 2 or 3,
(a+b) is equal to 1, 2 or 3,
or an oligomer derived from this silane.

13. Manufacturing process according to Claim 12, **characterized in that** the radical R¹ is an alkyl radical, preferably a C₁-C₆ alkyl radical, an alkenyl radical, preferably a C₂-C₆ alkenyl radical, an alkynyl radical, preferably a C₂-C₆ alkynyl radical, or an aryl radical, preferably a C₆-C₁₀ aryl radical.

14. Manufacturing process according to Claim 12 or 13, **characterized in that** the functional group borne by the radical R² is bonded to the silicon atom via an alkylene, alkenylene or alkynylene radical, optionally containing divalent groups such as O, S and/or NH.

15. Manufacturing process according to one of Claims 12 to 14, **characterized in that** the compound of formula (I):compound of formula (II) weight ratio varies from 5:95 to 50:50, advantageously from 15:85 to 25:75.

16. Manufacturing process according to one of Claims 1 to 15, **characterized in that** the weight content of the sol (A) calculated on the basis of all of the compounds (A), (B) and (D), varies from 4% to 20%, preferably from 5% to 15% and advantageously from 8% to 10% when M is equal to Si, and the weight content preferably varies from 50% to 65% when M is equal to Ti.

17. Manufacturing process according to one of Claims 1 to 16, **characterized in that** the weight content of (B) calculated on the basis of all of the compounds (A), (B) and (D), varies from 1% to 50%, preferably from 5% to 30% and advantageously from 7% to 25% when M = Si, and preferably from 10% to 50%, advantageously from 14% to 20% when M is equal to Ti.

18. Manufacturing process according to one of Claims 1 to 17, **characterized in that** the amount of thickener (D) represents 1% to 60%, preferably 7% to 50%, of the total weight of compounds (A), (B) and (D).

19. Manufacturing process according to one of Claims 1 to 18, **characterized in that** the composition has a solids content, defined as being the ratio of the sum of the masses of compounds (A), (B) and (D) to the total mass of the composition, which is less than 20%, preferably at most equal to 13%.

20. Manufacturing process according to one of Claims 1 to 19, **characterized in that** the sheet is heated at a temperature at least equal to 100°C and at most equal to the temperature at which a deformation of the glass sheet is observed.

21. Manufacturing process according to one of Claims 1 to 20, **characterized in that** it comprises, after application of the layer or of each layer, a step of drying, preferably at a temperature that varies from 60°C to 200°C, preferably 80°C to 110°C.

22. Glass sheet obtained by the process according to one of Claims 1 to 21.

23. Glazing comprising at least one glass sheet according to Claim 22.

24. Glazing according to Claim 23, **characterized in that** it is a laminated glazing or a double glazing.
